# EUROPEAN PATENT APPLICATION

(11) **EP 3 640 045 A1**
(43) Date of publication of application: **22.04.2020**
(21) Application number: 18816962.7
(22) Date of filing: 28.03.2018
(51) Int. Cl.: B60C 1/00, B60C 5/01, B60C 9/22

(54) **METAL-RESIN COMPOSITE MEMBER FOR TIRE, AND TIRE**

(30) Priority: 16.06.2017 JP 2017118595
(71) Applicant: Bridgestone Corporation, Tokyo 104-8340 (JP)
(72) Inventor: KYO, Soichi, Tokyo 104-8340 (JP); SUZUKI, Takahiro, Tokyo 104-8340 (JP)
(74) Representative: Oxley, Robin John George
(86) International application number: PCT/JP2018/013021
(87) International publication number: WO 2018/230097

(57) **Abstract**

A metal-resin composite member for tires, the metal-resin composite member comprising: a metal cord; and a resin layer, wherein: the resin layer is formed from a resin mixture that contains a polyester thermoplastic elastomer and an ester bond-containing amorphous resin having a glass transition temperature (Tg) of 40°C or higher, and a content ratio of the amorphous resin is not higher than 50% by mass of the resin mixture.

## Description

### Technical Field

The present invention relates to a metal-resin composite member for tires, and a tire.

### Background Art

In recent years, tires that include a tire main body (hereinafter, also referred to as a "tire frame") formed using a resin material in place of a conventional material such as a rubber, have been developed because of their lightweightedness, ease of molding, recyclability, and the like. For example, Patent Document 1 proposes a tire that includes a tire frame formed using a polyester thermoplastic resin as a resin material.

Patent Document 1 describes heat-melting a portion of a metal cord (reinforcing member) coated with a thermoplastic resin of the same kind as the thermoplastic resin configuring the tire frame, to thereby bond the metal cord to the tire frame. By using the same kind of thermoplastic resins for the reinforcing member and the tire frame, favorable bondability is realized between the tire frame and the reinforcing cord.

### Related Art Document

### Patent Document

[Patent Document 1] Japanese Patent Application Laid-Open (JP-A) No. 2012-46025

### SUMMARY OF INVENTION

### Technical Problem

From the standpoint of the cornering power (steering response) of a tire, it is effective to make the coating of the reinforcing member have a higher rigidity than the tire frame. However, when a resin material having a higher rigidity than the resin material of the tire frame is used for coating the reinforcing member, the bondability between the tire frame and the reinforcing member may deteriorate due to, for example, a difference in melting point.

Therefore, the provision of a metal-resin composite member for tires, which has excellent bondability with a thermoplastic resin-containing tire frame and can improve the cornering power of tires, and a tire including this metal-resin composite member for tires, is desired.

### Solution to Problem

A metal-resin composite member for tires, the metal-resin composite member comprising: a metal cord; and a resin layer, wherein: the resin layer is formed from a resin mixture that contains a polyester thermoplastic elastomer and an ester bond-containing amorphous resin having a glass transition temperature (Tg) of 40°C or higher, and a content ratio of the amorphous resin is not higher than 50% by mass of the resin mixture.

### Effect of the invention

According to the invention, a metal-resin composite member for tires, which has excellent bondability with a thermoplastic resin-containing tire frame and can improve the cornering power of tires, and a tire including this metal-resin composite member for tires are provided.

### BRIEF DESCRIPTION OF DRAWINGS

FIG. 1A is a perspective view illustrating a cross-section of a part of a tire according to one embodiment of the present disclosure;
FIG. 1B is a cross-sectional view of a bead portion attached to a rim;
FIG. 2 is a cross-sectional view taken along a tire rotation axis, which illustrates a state where a reinforcing cord is embedded in a crown portion of a tire case of the tire according to the present embodiment; and
FIG. 3 is a drawing for explaining operations of embedding the reinforcing cord in the crown portion of the tire case.

### DESCRIPTION OF EMBODIMENTS

### Mode for Carrying Out the Invention

Specific embodiments of the disclosure are described below in detail; however, the disclosure is not restricted to the below-described embodiments by any means, and the disclosure can be carried out with modifications as appropriate within the scope of the disclosure.

The term "resin" used herein is a concept that encompasses thermoplastic resins (including thermoplastic elastomers) and thermosetting resins, but not vulcanized rubbers.

The term "thermoplastic elastomer" used herein refers to a polymer compound composed of a copolymer that includes a polymer that constitutes a hard segment that is crystalline and having a high melting point or a high cohesive strength; and a polymer that constitutes a soft segment that is amorphous and having a low glass transition temperature. The thermoplastic elastomer has a property to become softened and fluidized as the temperature is increased, but becomes relatively hard and strong when cooled, and exhibits rubber-like elasticity.

In the present specification, the numerical ranges described as "from ... to ..." includes the lower limit value and the upper limit value, respectively.

The term "step" used herein encompasses not only an independent step but also a step that cannot be clearly distinguished from other steps, as long as the intended purpose of the step is achieved.

### <Metal-Resin Composite Member for Tires>

The metal-resin composite member for tires according to the disclosure (hereinafter, also referred to as the "metal-resin composite member") includes a metal cord and a resin layer, wherein the resin layer is formed from a resin mixture that contains a polyester thermoplastic elastomer and an ester bond-containing amorphous resin having a glass transition temperature (Tg) of 40°C or higher (hereinafter, also referred to as the "specific amorphous resin"), and a content ratio of the amorphous resin is not higher than 50% by mass of the resin mixture.

The present inventors have found that a metal-resin composite member, which has a resin layer formed from a resin mixture that includes a polyester thermoplastic elastomer and a specific amorphous resin, exhibits a superior effect of improving the cornering power of a tire, as compared with a metal-resin composite member for tires that includes a resin layer formed only of a polyester thermoplastic elastomer. The reason for this is believed to be that the rigidity of the resin mixture is increased as a result of blending an amorphous resin having a Tg of 40°C or higher with a polyester thermoplastic elastomer.

Further, the present inventors have found that the metal-resin composite member having the above-described constitution maintains favorable bondability with respect to a tire frame, as compared with a case of increasing the rigidity of a polyester thermoplastic elastomer by itself (for example, using a polyester thermoplastic elastomer having a higher rigidity). Although the reason for this is not necessarily clear, it is presumed that a resin mixture obtained by blending an amorphous resin not having a distinct melting point with a polyester thermoplastic elastomer is less likely to change the melting point thereof, as compared with a resin mixture in which a different polyester thermoplastic elastomer is used, thereby suppressing a gap in melting point with respect to a resin material that forms a tire frame.

Moreover, by controlling the content ratio of the amorphous resin to be not higher than 50% by mass of the resin mixture, it is considered that compatibility with respect to the resin material in the tire frame is maintained, thereby suppressing deterioration in bondability.
the metal-resin composite member may be disposed, for example, at an outer circumferential portion (crown portion) of a tire frame. A method of disposing the metal-resin composite member at an outer circumferential portion of the tire frame is not particularly restricted. For example, the metal-resin composite member may be wound around the outer circumferential portion of the tire frame by the method performed in the embodiments described below. In this process, it is preferred to heat-melt the resin layer of the metal-resin composite member and the crown portion of the tire frame, thereby increasing the bondability thereof.
the metal-resin composite member may consist only of a metal cord and a resin layer, or may include a member other than the metal cord and the resin layer. For example, the metal-resin composite member may include an adhesive layer between the metal cord and the resin layer.

The cross-sectional shape of the metal-resin composite member is not particularly restricted and may be, for example, circular or quadrangular. From the standpoint of ease of disposing the metal-resin composite member at a crown portion of a tire frame, the cross-sectional shape of the metal-resin composite member is preferably quadrangular. The metal-resin composite member may include only a single metal cord or plural metal cords, for example, two metal cords.

The details of the metal-resin composite member are described below, but the disclosure is not restricted thereto.

### [Metal Cord]

The metal cord is not particularly restricted, and any metal cord that are generally used for the purpose of reinforcing a tire may be employed. Examples of the metal cord include a monofilament composed of a single metal cord (single strand), and a multifilament that is formed from twisted plural metal cords (twisted strand). The cross-sectional shape, the diameter and the like of the metal cord are not particularly restricted, and may be selected in accordance with the intended use and the like of the composite member. The material of the metal cord is not particularly restricted, and may be steel and the like.

When the metal cord is a twisted strand of plural cords, the number of the cords is not particularly restricted. For example, the number of the cords may be from 2 to 10, preferably from 5 to 9.

From the standpoint of reinforcing a tire while reducing the weight thereof, the diameter of the metal cord is preferably from 0.2 mm to 2 mm, more preferably from 0.8 mm to 1.6 mm.

When the metal cord is a single cord, the diameter thereof is defined as a measured value of a diameter at a cross-section of the metal cord (the maximum value of a distance between the arbitrarily-selected two points on the outline of a cross-section of the metal cord). In a case in which the metal cord consists of plural cords, the diameter thereof is defined as a diameter of a circle that is smallest among the circles that include all of the cross-sections of the plural cords observed therein.

The tensile elastic modulus (hereinafter, unless otherwise specified, the term "elastic modulus" used herein refers to a tensile elastic modulus) of the metal cord is usually approximately from 100,000 MPa to 300,000 MPa, preferably from 120,000 MPa to 270,000 MPa, more preferably from 150,000 MPa to 250,000 MPa. The tensile elastic modulus of the metal cord is calculated from the slope of a stress-strain curve that is obtained using a tensile tester with a ZWICK-type chuck.

The elongation at break (tensile elongation at break) of the metal cord is usually approximately from 0.1% to 15%, preferably from 1% to 15%, more preferably from 1% to 10%. The tensile elongation at break of the metal cord can be determined from the strain based on a stress-strain curve that is obtained using a tensile tester with a ZWICK-type chuck.

### [Resin Layer]

The resin layer is formed from a resin mixture that includes a polyester thermoplastic elastomer and a specific amorphous resin, and the content ratio of the specific amorphous resin is not higher than 50% by mass of the resin mixture.

From the standpoint of bondability with respect to a tire frame, the content ratio of the specific amorphous resin in the resin mixture is not higher than 50% by mass, preferably not higher than 40% by mass, more preferably not higher than 30% by mass.

The lower limit value of the content ratio of the specific amorphous resin in the resin mixture is not particularly restricted. From the standpoint of attaining a sufficient effect of improving the rigidity, it is preferably 10% by mass or higher, more preferably 20% by mass or higher, still more preferably 30% by mass or higher.

The content ratio of the specific amorphous resin in the resin mixture can be examined by, for example, a nuclear magnetic resonance (NMR) method.

The method of verifying whether or not the resin mixture includes a polyester thermoplastic elastomer and a specific amorphous resin is not particularly restricted, and examples thereof include thermal analysis or observation of a cross-section of the resin mixture.

The melting point of the resin mixture is usually approximately from 100°C to 350°C. From the standpoints of durability and productivity of a tire, it is preferably approximately from 100°C to 250°C, more preferably from 120°C to 250°C.

In the present specification, the melting point of the resin mixture is a value measured by differential scanning calorimetry (DSC) in accordance with JIS K7121:2012. The measurement can be performed using, for example, "DSC Q100" manufactured by TA Instruments Inc., at a sweeping rate of 10°C/min. When the resin mixture has two or more melting points, the melting point of a component with the greatest mass ratio in the resin mixture is regarded as the melting point of the resin mixture, which also applies to the melting point of the resin material that forms a tire frame as described below.

The resin mixture may include a component other than a resin. Examples of the component include various kinds of fillers (e.g., silica, calcium carbonate and clay), age resistors, oils, plasticizers, color formers, and weather resistant agents. When the resin mixture include a component other than a resin, the total content ratio thereof is preferably not higher than 10% by mass, more preferably not higher than 5% by mass, of the total resin mixture.

From the standpoint of improving the cornering power, the elastic modulus of the resin layer is preferably 400 MPa or higher. From the standpoint of durability, the elastic modulus of the resin layer is preferably 1,500 MPa or less. In the present specification, the elastic modulus of the resin layer and the tensile elastic modulus of a resin composition are the values measured in accordance with JIS K7113:1995.

In the metal-resin composite member, the thickness of the resin layer is not particularly restricted. From the standpoint of water barrier property, the minimum thickness of the resin layer (at a portion with the smallest thickness) is preferably 1.3 mm or more. From the standpoint of durability, the maximum thickness of the resin layer (at a portion with the largest thickness) is preferably 5.0 mm or less.

### (Specific Amorphous Resin)

The term "amorphous resin" used herein refers to a thermoplastic resin that either has an extremely low degree of crystallization or does not become a crystallized state. The resin mixture may include only a single kind of the specific amorphous resin, or two or more kinds of the specific amorphous resins.

From the standpoint of imparting the resin layer with sufficient rigidity, the Tg of the specific amorphous resin is 40°C or higher, preferably 60°C or higher, more preferably 80°C or higher. The Tg of the specific amorphous resin is a value measured by DSC in accordance with JIS K6240:2011. Specifically, the Tg is defined as a temperature at an intersection of an original baseline in DSC measurement and a tangent line at an inflection point. The measurement can be performed using, for example, "DSC Q100" manufactured by TA Instruments Inc., at a sweeping rate of 10°C/min.

The specific amorphous resin has an ester bond, from the standpoint of compatibility with respect to a polyester thermoplastic elastomer. Examples of an amorphous resin having an ester bond include polyester thermoplastic resins, polycarbonate thermoplastic resins, and polyurethane thermoplastic resins.

Examples of the commercially available products of the specific amorphous resin include amorphous polyester resins of the VYLON Series, manufactured by TOYOBO Co., Ltd.; amorphous polycarbonate resins of the NOVAREX Series, manufactured by Mitsubishi Engineering-Plastics Corporation; and amorphous polyester resins of the ALTESTER Series, manufactured by Mitsubishi Gas Chemical Co., Inc.

### (Polyester Thermoplastic Elastomer)

The polyester thermoplastic elastomer is, for example, a polymer compound in which at least a polyester forms a hard segment that is crystalline and has a high melting point, and a soft segment that is amorphous and has a low glass transition temperature is formed from a different polymer. The resin mixture may include only a single kind of polyester thermoplastic elastomer, or may include two or more kinds thereof.

The content ratio of the polyester thermoplastic elastomer in the resin mixture is preferably higher than 50% by mass, more preferably 60% by mass or more, still more preferably 70% by mass or more.

Examples of a polyester that forms a hard segment of a polyester thermoplastic elastomer include an aromatic polyester. The aromatic polyester can be formed from, for example, an aromatic dicarboxylic acid or an ester-forming derivative thereof, and an aliphatic diol. The aromatic polyester is preferably polybutylene terephthalate, which is derived from terephthalic acid and/or dimethyl terephthalate and 1,4-butanediol; and may be a polyester derived from a dicarboxylic acid component (e.g., isophthalic acid, phthalic acid, naphthalene-2,6-dicarboxylic acid, naphthalene-2,7-dicarboxylic acid, diphenyl-4,4'-dicarboxylic acid, diphenoxyethane dicarboxylic acid, 5-sulfoisophthalic acid, or an ester-forming derivative thereof) and a diol having a molecular weight of 300 or less, such as an aliphatic diol (e.g., ethylene glycol, trimethylene glycol, pentamethylene glycol, hexamethylene glycol, neopentyl glycol, or decamethylene glycol), an alicyclic diol (e.g., 1,4-cyclohexane dimethanol or tricyclodecane dimethylol) or an aromatic diol (e.g., xylylene glycol, bis(*p*-hydroxy)diphenyl, bis(*p*-hydroxyphenyl)propane, 2,2-bis[4-(2-hydroxyethoxy)phenyl]propane, bis[4-(2-hydroxy)phenyl]sulfone, 1,1-bis[4-(2-hydroxyethoxy)phenyl]cyclohexane, 4,4'-dihydroxy-*p*-terphenyl, or 4,4'-dihydroxy-*p*-quaterphenyl), or may be a copolymerized polyester in which two or more kinds of these dicarboxylic acid components and diol components are used in combination. Further, for example, a polyfunctional carboxylic acid component, a polyfunctional oxyacid component or a polyfunctional hydroxy component, which has three or more functional groups, can be copolymerized at an amount of 5% by mole or less.

Specific examples of the polyester that forms a hard segment include polyethylene terephthalate, polybutylene terephthalate, polymethylene terephthalate, polyethylene naphthalate and polybutylene naphthalate, among which polybutylene terephthalate is preferred.

Examples of a polymer that forms a soft segment include an aliphatic polyester and an aliphatic polyether.

Examples of the aliphatic polyether include poly(ethylene oxide) glycol, poly(propylene oxide) glycol, poly(tetramethylene oxide) glycol, poly(hexamethylene oxide) glycol, copolymers of ethylene oxide and propylene oxide, ethylene oxide-addition polymers of poly(propylene oxide) glycol, and copolymers of ethylene oxide and tetrahydrofuran.

Examples of the aliphatic polyester include poly(*ε*-caprolactone), polyenantholactone, polycaprylolactone, polybutylene adipate, and polyethylene adipate.

Among these aliphatic polyethers and aliphatic polyesters, from the standpoint of elastic properties of the resulting polyester block copolymer, poly(tetramethylene oxide) glycol, an ethylene oxide-adduct of poly(propylene oxide) glycol, poly(*ε*-caprolactone), polybutylene adipate and polyethylene adipate are preferred as the polymer that forms a soft segment.

From the standpoints of toughness and flexibility at low temperature, the number-average molecular weight of the polymer that forms a soft segment is preferably from 300 to 6,000. Further, from the standpoint of moldability, the mass ratio (x:y) of the hard segment (x) and the soft segment (y) is preferably from 99:1 to 20:80, more preferably from 98:2 to 30:70.

The polyester thermoplastic elastomer is preferably a polyester thermoplastic elastomer having a hard segment that is at least one selected from the group consisting of polybutylene terephthalate (PBT), polyethylene terephthalate (PET), polybutylene naphthalate (PBN) and polyethylene naphthalate (PEN); more preferably a polyester thermoplastic elastomer having a soft segment that is poly(ethylene oxide) glycol, such as a polytetramethylene glycol (PTMG).

Examples of the commercially available products of a polyester thermoplastic elastomer include the HYTREL Series manufactured by DuPont-Toray Co., Ltd. (e.g., 3046, 5557, 6347, 4047 and 4767) and the PELPRENE Series manufactured by TOYOBO Co., Ltd. (e.g., P30B, P40B, P40H, P55B, P70B, P150B, P280B, P450B, P150M, S1001, S2001, S5001, S6001 and S9001).

### (Other Resin)

The resin mixture may include a resin other than the polyester thermoplastic elastomer and the specific amorphous resin (also referred to as the other resin). If the resin mixture includes the other resin, the total ratio of the polyester thermoplastic elastomer and the specific amorphous resin with respect to all resins is preferably 70% by mass or higher, more preferably 80% by mass or higher, still more preferably 90% by mass or higher.

When the resin mixture include the other resin, from the standpoint of improving the rigidity of the resin layer while maintaining favorable bondability with respect to a tire frame, the resin mixture preferably includes a polyester thermoplastic resin. The term "polyester thermoplastic resin" used herein does not encompass the polyester thermoplastic elastomer as described above. The term "polyester thermoplastic resin" encompasses both of a resin consisting of only a structural unit corresponding to polyester, and a resin in which the content of a structural unit corresponding to polyester is 80% by mole or more, preferably 90% by mole or more, more preferably 95% by mole or more, with respect to the total structural units corresponding to polyester.

When the resin mixture includes a polyester thermoplastic resin as the other resin, from the standpoint of ensuring favorable adhesion with respect to a tire frame, the polyester thermoplastic elastomer and the polyester thermoplastic resin preferably have similar structures. For example, when the hard segment of the polyester thermoplastic elastomer is polybutylene terephthalate, a polyester thermoplastic resin is preferably polybutylene terephthalate, polyethylene terephthalate, polybutylene naphthalate, polyethylene naphthalate or the like, more preferably polybutylene terephthalate.

Examples of the commercially available products of the polyester thermoplastic resin include the DURANEX Series (e.g., 201AC, 2000 and 2002) manufactured by Polyplastics Co., Ltd., the NOVADURAN Series (e.g., 5010R5 and 5010R3-2) manufactured by Mitsubishi Engineering-Plastics Corporation, and the TORAYCON Series (e.g., 1401X06 and 1401X31) manufactured by Toray Industries, Inc.

### [Adhesive Layer]

The metal-resin composite member may include an adhesive layer between the metal cord and the resin layer. The material of the adhesive layer is not particularly restricted, and examples thereof include thermoplastic resins (including thermoplastic resin elastomers). The adhesive layer may include only a single thermoplastic resin, or may include two or more kinds thereof.

From the standpoint of adhesion with respect to the resin layer, the thermoplastic resin that forms the adhesive layer is preferably a thermoplastic resin that has a structural unit of the same kind as a hard segment of the polyester thermoplastic resin elastomer in the resin mixture that forms the resin layer. For example, the thermoplastic resin that forms the adhesive layer is preferably a polyester thermoplastic elastomer or a polyester thermoplastic resin.

From the standpoint of adhesion with respect to the metal cord, the thermoplastic resin that forms the adhesive layer is preferably modified with a functional group, more preferably modified with an acidic functional group.

### <Tire>

The tire of the disclosure includes an annular tire frame and the above-described metal-resin composite member, which is disposed on an outer circumferential portion of the tire frame, wherein the tire frame is formed from a resin material containing a polyester thermoplastic resin.

From the standpoints of running performance and durability of the tire, the resin material that forms the tire frame preferably includes at least a polyester thermoplastic elastomer as the polyester thermoplastic resin.

From the standpoint of bondability between the resin layer of the metal-resin composite member and the tire frame, the structure of the polyester thermoplastic elastomer included in the resin mixture that forms the resin layer and the structure of the polyester thermoplastic resin included in the resin material that forms the tire frame are preferably as similar as possible. For example, when the hard segment of the polyester thermoplastic elastomer in the resin mixture that forms the resin layer is polybutylene terephthalate, the polyester thermoplastic resin in the resin material that forms the tire frame is preferably a thermoplastic elastomer having a hard segment that is polybutylene terephthalate, polybutylene naphthalate or the like, more preferably a thermoplastic elastomer having a hard segment that is polybutylene terephthalate.

The melting point of the resin material is not particularly restricted, and is usually from 100°C to 350°C. From the standpoints of durability and productivity of the tire, the melting point of the resin material is preferably selected from 100°C to 250°C, more preferably selected from 120°C to 250°C.

From the standpoint of bondability between the metal-resin composite member and the tire frame, a difference in melting point (ΔTm) between the resin mixture that forms the resin layer of the metal-resin composite member and the resin material that forms the tire frame is preferably 6°C or less, more preferably 3°C or less.

The difference in melting point is defined as a value obtained by measuring the melting point of the resin mixture that forms the resin layer of the metal-resin composite member (melting point a) and the melting point of the resin used for the formation of the tire frame (melting point b) by DSC, and calculating the difference thereof (a - b; °C).

Either one of the melting point of the resin mixture that forms the resin layer of the metal-resin composite member or the melting point of the resin material that forms the tire frame may be higher than the other. In the present specification, a melting point measured by DSC is regarded as the melting point of the resin mixture.

The resin material that forms the tire frame may also include a resin other than the polyester thermoplastic resin. In this case, the ratio of the polyester thermoplastic resin with respect to the total resin is preferably 70% by mass or more, more preferably 80% by mass or more, still more preferably 90% by mass or more.

Examples of the resin other than the polyester thermoplastic resin that is included in the resin material that forms the tire frame include thermoplastic elastomers, such as polyamide thermoplastic elastomers, olefin thermoplastic elastomers, polyurethane thermoplastic elastomers, and polystyrene thermoplastic elastomers; and thermoplastic resins that are composed of structural units corresponding to a hard segment of these thermoplastic elastomers, such as polyamide thermoplastic resins, olefin thermoplastic resins, polyurethane thermoplastic resins, and polystyrene thermoplastic resins.

The resin material may also include a component other than the resin. Examples of the component include various fillers (e.g., silica, calcium carbonate and clay), age resistors, oils, plasticizers, color formers, and weather resistant agents. When the resin material include a component other than the resin, the total content ratio thereof is preferably not greater than 10% by mass, more preferably not greater than 5% by mass, with respect to the total mass of the resin material.

The tensile elastic modulus, which is defined in JIS K7113:1995, of the resin material is preferably from 50 MPa to 1,000 MPa, more preferably from 50 MPa to 800 MPa, still more preferably from 50 MPa to 700 MPa. When the tensile elastic modulus of the resin material is from 50 MPa to 1,000 MPa, attachment of a rim to the tire can be efficiently performed while maintaining the shape of the tire frame.

The tensile strength, which is defined in JIS K7113 (1995), of the resin material is usually approximately from 15 MPa to 70 MPa, preferably from 17 MPa to 60 MPa, more preferably from 20 MPa to 55 MPa.

The tensile strength at yield, which is defined in JIS K7113 (1995), of the resin material is preferably 5 MPa or more, more preferably from 5 MPa to 20 MPa, still more preferably from 5 MPa to 17 MPa. When the tensile strength at yield of the resin material is 5 MPa or more, the tire can endure the deformation upon application of a load during running or the like.

The tensile elongation at yield, which is defined in JIS K7113 (1995), of the resin material is preferably 10% or more, more preferably from 10% to 70%, still more preferably from 15% to 60%. When the tensile elongation at yield of the resin material is 10% or more, attachment to a rim can be performed favorably due to a large elastic region.

The tensile elongation at break, which is defined in JIS K7113 (1995), of the resin material is preferably 50% or more, more preferably 100% or more, still more preferably 150% or more, most preferably 200% or more. When the tensile elongation at break of the resin material is 50% or more, attachment to a rim can be performed favorably and the tire becomes less likely to break against collision.

The deflection temperature under load (0.45 MPa), which is defined in ISO75-2 or ASTM D648, of the resin material is preferably 50°C or more, more preferably from 50°C to 150°C, still more preferably from 50°C to 130°C. When the deflection temperature under load of the resin material is 50°C or more, deformation of the tire frame can be suppressed even in a case of performing vulcanization during the production of the tire.

When the metal-resin composite member includes an adhesive layer between the metal cord and the resin layer, it is preferred that the Martens hardness (d1) of the tire frame, the Martens hardness (d2) of the resin layer, and the Martens hardness (d3) of the adhesive layer satisfy a relationship of d1 ≤ d2 < d3. When the Martens hardness of the resin layer is less than the Martens hardness of the adhesive layer, and is equal to or greater than the Martens hardness of the tire frame, the difference in rigidity between the resin material that forms the tire frame and the metal member is effectively reduced. As a result, durability of the tire can be further improved.

In the following, an embodiment of the tire according to the disclosure will be described by referring to the drawings.

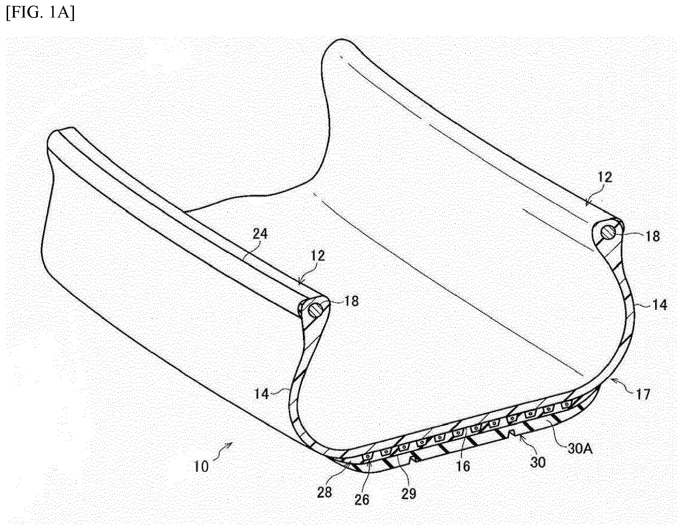

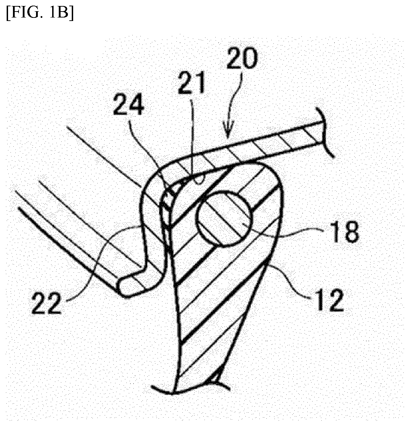

FIG. 1A is a perspective view illustrating a cross-section of a part of a tire 10 according to the present embodiment. FIG. 1B is a cross-sectional view of a bead portion of the tire 10 according to the present embodiment being attached to a rim. As illustrated in FIG. 1A, the tire 10 has a cross-sectional shape that is substantially the same as that of a conventional and common rubber-made pneumatic tire. As illustrated in FIG. 1A, the tire 10 has a tire case 17 that includes a pair of bead portions 12, which are each in contact with a bead sheet 21 and a rim flange 22 of a rim 20 illustrated in FIG. 1B; side portions 14, which extend from the bead portions 12 toward the outer side along a radial direction of the tire; and a crown portion 16 (outer circumferential portion), which connects the outer ends in the radial direction of the side portions 14.

The tire case 17 corresponds to the above-described tire frame, and is formed from the above-described resin material. Although the tire case 17 is entirely formed from the above-described resin material in the embodiment, the disclosure is not restricted to this configuration and different resin materials may be used for respective parts (e.g., side portions 14, crown portion 16 and bead portions 12) as with a case of a conventional rubber-made pneumatic tire. Further, a reinforcing material (e.g., a fiber, a cord, a nonwoven fabric, or a woven fabric, which is made of a polymer material or a metal) may be embedded in order to reinforce each part of the tire case 17.

The tire case 17 is formed by preparing two tire case half sections (i.e., tire frame pieces) each having a shape of the tire case 17 being divided at the center of the tread width in the circumferential direction, and bonding them together at the tire equatorial plane. The tire case 17 is not restricted to that formed from two members, and may be formed from three or more members.

The tire case half sections can be prepared by, for example, vacuum molding, pressure molding, injection molding, or melt casting. Accordingly, as compared to a conventional case where a tire case is molded from a rubber, the production process can be greatly simplified and the time for molding can be saved because it is not necessary to perform vulcanization.

In the present embodiment, as in a conventional pneumatic tire, an annular bead core 18 is embedded in the bead portion 12 illustrated in FIG. 1B. Although a steel cord is used as the bead core 18 in the embodiment, an organic fiber cord, an organic fiber cord having a resin layer, a hard resin cord or the like may be used as well. The bead core 18 may be omitted when sufficient rigidity of the bead portion 12 is ensured and there is no problem in fitting of the bead portion 12 with the rim 20.

In the present embodiment, an annular sealing layer 24, which is composed of a material having superior sealing performance than the resin material that forms the tire case 17, is formed at a portion of each bead portion 12 that comes into contact with the rim 20, or at least at a portion of each bead portion 12 that comes into contact with the rim flange 22 of the rim 20. The sealing layer 24 may be formed also at portions where the tire case 17 (bead portion 12) is in contact with the bead sheet 21. The sealing layer 24 may be omitted when the resin material that forms the tire case 17 can ensure sufficient sealing with the rim 20. Examples of the material having superior sealing performance than the resin material that forms the tire case 17 include a material that is softer than the resin material that forms the tire case 17, such as rubber, and thermoplastic resins and thermoplastic elastomers that are softer than the resin material.

As illustrated in FIG. 1A, a reinforcing cord 26 corresponding to the metal-resin composite member is wound around the crown portion 16 of the tire case 17 along a circumferential direction. When viewed at a cross-section along the axial direction of the tire case 17, the reinforcing cord 26 is disposed in a spiral manner while at least a part thereof is embedded in the crown portion 16, and forms a reinforcing cord layer 28. At an outer side of the reinforcing cord layer 28, along a radial direction of the tire, a tread 30 composed of a material having superior wear resistance than the resin material constituting the tire case 17, such as a rubber, is disposed.

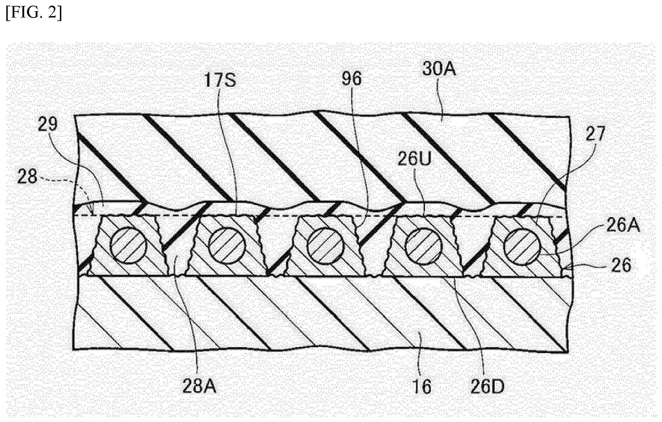

In the present embodiment, as illustrated in FIG. 2, the reinforcing cord 26 is in a state where a metal member 26A such as a steel cord is covered with a coating resin (resin mixture) 27 (i.e., a coated cord member). The reinforcing cord 26 and the crown portion 16 are bonded by a method such as welding or using an adhesive.

In the present embodiment, as illustrated in FIG. 2, the reinforcing cord 26 has a substantially trapezoidal cross-sectional shape. In the following descriptions, the upper surface of the reinforcing cord 26 (the surface at the outer side in a radial direction of the tire) is indicated by 26U, and the lower surface of the reinforcing cord 26 (the surface at the inner side in a radial direction of the tire) is indicated by 26D. Although the reinforcing cord 26 has a substantially trapezoidal cross-sectional shape in the embodiment, the disclosure is not restricted to this constitution. The reinforcing cord 26 may be in any shape, except a shape in which the width of a cross-sectional shape increases from the side of the lower surface 26D (inner side in the radial direction of the tire) toward the upper surface 26U (outer side in the radial direction of the tire).

As illustrated in FIG. 2, gaps 28A are formed between adjacent reinforcing cords 26 along a circumferential direction. Accordingly, the outer circumferential surface of the reinforcing cord layer 28 has an irregular shape, and an outer circumferential surface 17S of the tire case 17, which is formed by the reinforcing cord layer 28, also has an irregular shape.

The outer circumferential surface 17S (including the irregularities) of the tire case 17 has finely roughened irregularities 96, and a cushion rubber 29 is bonded thereon with a bonding agent. The cushion rubber 29 fills the roughened irregularities 96 at a surface in contact with the reinforcing cord 26.

On the cushion rubber 29 (the outer circumferential surface side), the above-described tread 30 is bonded. On the surface of the tread 30 that is in contact with the road surface, a tread pattern (not illustrated) constituted by plural grooves is formed in the same manner as in a conventional rubber-made pneumatic tire.

A method of producing the tire of the present embodiment is not particularly restricted. The tire of the present invention may be produced by sequentially performing, for example, the tire case molding step, reinforcing cord member winding step, roughening treatment step, layering step, and vulcanization step, which are described below, in this order.

### (Tire Case Molding Step)

First, tire case half sections, supported by a thin metal support ring, are positioned to face each other. Subsequently, a bonding mold is set such that it comes into contact with the outer circumferential surfaces of the tire case half sections at which the same are facing each other. The bonding mold is configured to press the regions around the bonding portions (abutting portions) of the tire case half sections with a prescribed pressure. Then, the regions around the bonding portions of the tire case half sections are pressed at a temperature of not lower than the melting points of the resin layer of the reinforcing cord and the resin material constituting the tire case, whereby the bonding portions are melted and the tire case half sections are integrated to form the tire case 17.

In the present embodiment, although the bonding portions of the tire case half sections are heated using a bonding mold, the disclosure is not restricted thereto. For example, the tire case half sections may be bonded together by heating the bonding portions using a high-frequency heater or the like, or softening or melting the bonding portions in advance by hot air, irradiation with infrared radiation or the like, and subsequently applying a pressure to the bonding portions using a bonding mold.

### (Reinforcing Cord Member Winding Step)

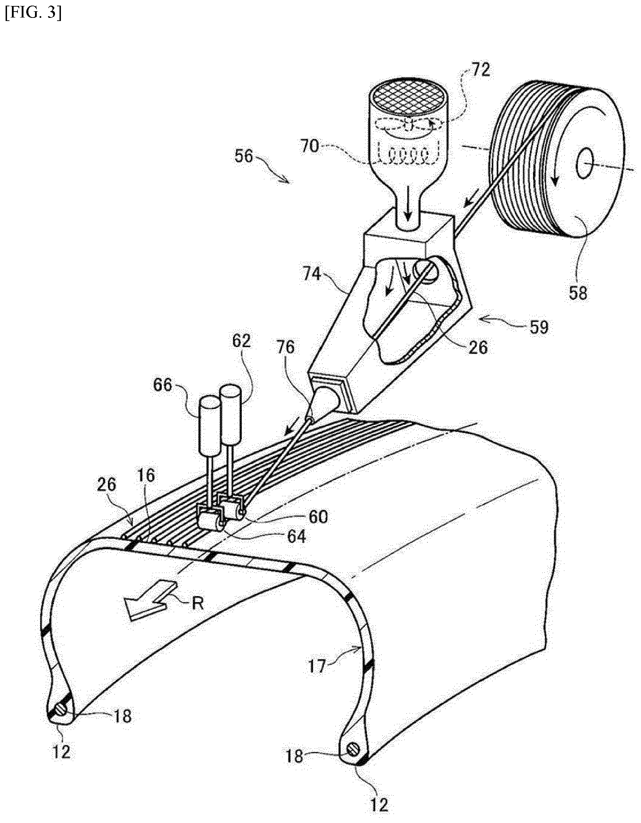

In the following, the step of winding the reinforcing cord 26 around the tire case 17 will be described by referring to FIG. 3. FIG. 3 is a drawing for explaining operations of embedding the reinforcing cord 26 in the crown portion of the tire case 17 using a cord heating device and rollers.

In FIG. 3, a cord feeding apparatus 56 includes a reel 58, around which the reinforcing cord 26 is wound; a cord heating device 59, which is disposed downstream of the reel 58 in the cord transfer direction; a first roller 60, which is disposed downstream in the transfer direction of the reinforcing cord 26; a first cylinder device 62, which moves the first roller 60 in a direction toward or away from the outer circumferential surface of the tire; a second roller 64, which is disposed downstream of the first roller 60 in the transfer direction of the reinforcing cord 26; and a second cylinder device 66, which moves the second roller 64 in a direction toward or away from the outer circumferential surface of the tire. The second roller 64 may be made of metal and used as a cooling roller.

In the present embodiment, the surface of the first roller 60 or the surface of the second roller 64 may be subjected to a treatment for inhibiting adhesion of the melted or softened coating resin material 27 (such as a fluorine resin coating). Alternatively, the rollers may be formed from a material to which the coating resin material 27 is less likely to attach. In the present embodiment, although the cord feeding apparatus 56 has two rollers, i.e., the first roller 60 and the second roller 64, the cord feeding apparatus 56 may have only one of these rollers.

The cord heating device 59 includes a heater 70 and a fan 72, which generate a hot air flow. The cord heating device 59 further includes a heating box 74, having an inner space for the reinforcing cord 26 to pass, to which the hot air flow is supplied; and a discharge outlet 76 from which the heated reinforcing cord 26 is discharged.

In this step, first, the temperature of the heater 70 of the cord heating device 59 is increased, and the ambient air that has been heated by the heater 70 is introduced into the heating box 74 with an air flow generated by rotation of the fan 72. Then, the reinforcing cord 26 that has been reeled out from the reel 58 is transferred to the heating box 74 with an inner space that has been heated with the hot air flow, whereby the reinforcing cord 26 is heated. The heating temperature is adjusted such that the coating resin 27 of the reinforcing cord 26 becomes molten or softened.

The heated reinforcing cord 26 passes through the discharge outlet 76, and is spirally wound around the outer circumferential surface of the crown portion 16 of the tire case 17 rotating in the direction of an arrow R as illustrated in FIG. 3, while applying a constant tension. In this process, the lower surface 26D of the reinforcing cord 26 is brought into contact with the outer circumferential surface of the crown portion 16. The coating resin 27, which is melted or softened by heating, spreads over the outer circumferential surface of the crown portion 16, whereby the reinforcing cord 26 is welded to the outer circumferential surface of the crown portion 16. As a result, the bonding strength between the crown portion 16 and the reinforcing cord 26 is improved.

In the present embodiment, although the reinforcing cord 26 is bonded to the outer circumferential surface of the crown portion 16 in the above-described manner, the bonding may be performed by other methods as well. For example, the bonding may be performed such that the reinforcing cord 26 is partially or entirely embedded in the crown portion 16.

### (Roughening Treatment Step)

Subsequently, using a blasting apparatus that is not illustrated in the drawing, a blasting abrasive is ejected at high speed toward the outer circumferential surface 17S of the tire case 17 while rotating the same. The ejected blasting abrasive collides with the outer circumferential surface 17S to form finely roughened irregularities 96, which have an arithmetic average roughness (Ra) of not less than 0.05 mm, at the outer circumferential surface 17S. By the formation of the finely roughened irregularities 96 on the outer circumferential surface 17S of the tire case 17, the outer circumferential surface 17S is hydrophilized, and wettability with respect to a bonding agent as described below is improved.

### (Layering Step)

Next, a bonding agent for bonding the cushion rubber 29 is applied onto the roughened outer circumferential surface 17S of the tire case 17. The bonding agent is not particularly restricted and, for example, a triazine thiol adhesive, a chlorinated rubber adhesive, a phenolic resin adhesive, an isocyanate adhesive, a halogenated rubber adhesive, or a rubber adhesive can be used. The bonding agent is preferably capable of reacting at a temperature at which the cushion rubber 29 can be vulcanized (from 90°C to 140°C).

Then, the cushion rubber 29, which is in an unvulcanized state, is disposed around the outer circumferential surface 17S to which the bonding agent has been applied, and a bonding agent such as a rubber cement composition is applied onto the cushion rubber 29. Subsequently, a tread rubber 30A, which is in a vulcanized or semi-vulcanized state, is disposed on the cushion rubber 29 to which the bonding agent has thus been applied, whereby a green tire case is obtained.

### (Vulcanization Step)

Next, the green tire case is vulcanized in a vulcanization can or a mold. In this process, the unvulcanized cushion rubber 29 flows to fill the roughened irregularities 96 that have been formed on the outer circumferential surface 17S of the tire case 17 by the roughening treatment. Once the vulcanization is completed, an anchoring effect is exerted by the cushion rubber 29 filling the roughened irregularities 96, and the bonding strength between the tire case 17 and the cushion rubber 29 is improved. In other words, the bonding strength between the tire case 17 and the tread 30 is improved by means of the cushion rubber 29.

Thereafter, the above-described sealing layer 24 is attached to the bead portion 12 of the tire case 17 using an adhesive or the like, whereby the tire 10 is completed.

The above-described embodiments may be implemented with various modifications without departing from the spirit of the disclosure. It is noted that the scope of the disclosure is not limited to these embodiments. For the details of embodiments that are applicable to the disclosure, reference can be made to, for example, JP-A No. 2012-46031.

The scope of the disclosure also includes the following embodiments.
<1> A metal-resin composite member for tires, the metal-resin composite member comprising:
   a metal cord; and
   a resin layer, wherein:
      the resin layer is formed from a resin mixture that contains a polyester thermoplastic elastomer and an ester bond-containing amorphous resin having a glass transition temperature (Tg) of 40°C or higher, and
      a content ratio of the amorphous resin is not higher than 50% by mass of the resin mixture.
<2> The metal-resin composite member for tires according to <1>, wherein the amorphous resin is at least one selected from the group consisting of polyester thermoplastic resins and polycarbonate thermoplastic resins.
<3> The metal-resin composite member for tires according to <1> or <2>, wherein the resin layer has an elastic modulus of 400 MPa or higher.
<4> A tire, comprising:
   an annular tire frame; and
   the metal-resin composite member for tires according to any one of <1> to <3>, which is disposed on an outer circumferential portion of the tire frame,
   wherein the tire frame is formed from a resin material containing a polyester thermoplastic resin.
<5> The tire according to <4>, wherein a difference in melting point between the resin material and the resin mixture is 6°C or less.
<6> The tire according to <4> or <5>, wherein the polyester thermoplastic resin comprises a polyester thermoplastic elastomer.
<7> The tire according to any one of <4> to <6>, wherein the metal-resin composite member for tires is disposed on the outer circumferential portion of the tire frame by winding.

### Examples

In the following, the disclosure will be described more concretely by way of the Examples, but the disclosure is not restricted thereto.

### (1) Production of Tire

On the outer circumference of a multifilament having an average diameter of 1.15 mm (a cord obtained by twisting five monofilaments of 0.35 mm in average diameter (made of steel, strength: 280 N, elongation: 3%)), an adhesive layer was formed using an acid-modified polyester thermoplastic elastomer ("PRIMALLOY AP GQ730", manufactured by Mitsubishi Chemical Corporation). Then, a resin layer of 0.1 mm in minimum thickness was formed on the adhesive layer by extruding a resin mixture using an extruder, and cooling the same, thereby obtaining a metal-resin composite member.

Tires of the Examples and the Comparative Examples (tire size: 225/40R18), having a tire frame as in the embodiments described above and the metal-resin composite member prepared in the above process being disposed on an outer circumferential portion of the tire frame, were produced by a known method. The resin layer and the tire frame were formed using the resins shown in Table 1 at the respective blending ratios (parts by mass). The details of the resins shown in Table 1 are as follows.

TPC1: polyester thermoplastic elastomer in which a hard segment is polybutylene terephthalate and a soft segment is polytetramethylene glycol ("HYTREL 5557" manufactured by DuPont-Toray Co., Ltd., HS (hard segment) ratio: 60.4% by mole)
TPC2: polyester thermoplastic elastomer in which a hard segment is polybutylene terephthalate and a soft segment is polytetramethylene glycol ("HYTREL 6347" manufactured by DuPont-Toray Co., Ltd., HS ratio: 75% by mole)
PBT1: polybutylene terephthalate ("TORAYCON 1401X06" manufactured by Toray Industries, Inc.)

Amorphous resin 1: polyester thermoplastic resin ("VYLON 270" manufactured by TOYOBO Co., Ltd., Tg: 67°C)
Amorphous resin 2: polycarbonate thermoplastic resin ("NOVAREX 7020IR" manufactured by Mitsubishi Engineering-Plastics Corporation, Tg: 120°C)
Amorphous resin 3: styrene thermoplastic elastomer (SEBS) ("TUFTEC H1052" manufactured by Asahi Kasei Corporation, Tg: -47°C)

### (2) Measurement of Elastic Modulus

The elastic modulus (E/MPa) of the resin used for the formation of the resin layer was measured in accordance with JIS K7113:1995. The results thereof are shown in Table 1.

### (3) Measurement of Difference in Melting Point

The melting point of the resin used for the formation of the resin layer (melting point
a) and the melting point of the resin used for the formation of a tire frame (melting point b) were measured by DSC, and the difference in melting point (melting point a - melting point
b) was regarded as the melting point difference (ΔTm, °C). The results thereof are shown in Table 1.

### (4) Evaluation of Bondability

After bonding the resin layer of the metal-resin composite member with the tire frame, metal-resin composite member was peeled off from the tire frame by holding the end with a pair of pliers. The state of the metal-resin composite member after the peeling was evaluated based on the following criteria. The metal-resin composite member with a greater evaluation number is considered to have excellent bondability. The results thereof are shown in Table 1.

4: The resin layer and the tire frame are not separated at an interface thereof, and the area of an interface at which the metal cord and the resin layer are separated is less than 80% of the whole interface.
3: The resin layer and the tire frame are not separated at an interface thereof, and the area of an interface at which the metal cord and the resin layer are separated is 60% or more and less than 80% of the whole interface.
2: The resin layer and the tire frame are not separated at an interface thereof, and the area of an interface at which the metal cord and the resin layer are separated is less than 60% of the whole interface.
1: The resin layer and the tire frame are separated at an interface thereof.

### (5) Evaluation of Cornering Power

The tire with an air pressure set at 230 kPa (relative pressure) was placed on a flat belt tester and allowed to rotate at a rate corresponding to a running speed of 80 km/h to measure the lateral force upon application of a slip angle. Specifically, the lateral force at a slip angle of 0° and the lateral force at a slip angle of 1° were measured, and the difference between the measured values was indicated as an index with respect to the difference measured in the tire of Comparative Example 1, being 100. The index was used as an indicator of the cornering power and evaluated based on the following criteria. The tire with a greater number is considered to have excellent cornering power. The results thereof are shown in Table 1.

4: The index is 110 or greater.
3: The index is 105 or greater and less than 110.
2: The index is 95 or greater and less than 105.
1: The index is less than 95.

**[Table 1]**

| Material | | Comparative Example 1 | Comparative Example 2 | Comparative Example 3 | Example 1 | Example 2 | Comparative Example 4 | Example 3 | Example 4 | Comparative Example 5 | Example 5 |
|---|---|---|---|---|---|---|---|---|---|---|---|
| Tire frame | TPC1 | 100 | 100 | 100 | 100 | 100 | 100 | 100 | 100 | 100 | 100 |
| | TPC2 | 0 | 0 | 0 | 0 | 0 | 0 | 0 | 0 | 0 | 0 |
| Resin layer | TPC1 | 100 | 50 | 0 | 80 | 60 | 40 | 80 | 60 | 40 | 40 |
| | TPC2 | 0 | 50 | 100 | 0 | 0 | 0 | 0 | 0 | 0 | 40 |
| | PBT1 | 0 | 0 | 0 | 0 | 0 | 0 | 0 | 0 | 0 | 0 |
| | Amorphous resin 1 | 0 | 0 | 0 | 20 | 40 | 60 | 0 | 0 | 0 | 0 |
| | Amorphous resin 2 | 0 | 0 | 0 | 0 | 0 | 0 | 20 | 40 | 60 | 20 |
| | Amorphous resin 3 | 0 | 0 | 0 | 0 | 0 | 0 | 0 | 0 | 0 | 0 |
| Resin layer thickness (µm) | | 2.2 | 2.2 | 2.2 | 2.2 | 2.2 | 2.2 | 2.2 | 2.2 | 2.2 | 2.2 |
| Elastic modulus (MPa) | | 210 | 310 | 420 | 480 | 710 | 1,190 | 490 | 780 | 1,290 | 590 |
| ΔTm (°C) | | 0 | 4 | 7 | -1 | -2 | -2 | 0 | -1 | -2 | 1 |
| Bondability | | 3 | 2 | 1 | 3 | 4 | 2 | 4 | 4 | 2 | 3 |
| Cornering power | | 2 | 3 | 4 | 4 | 4 | 4 | 4 | 4 | 4 | 4 |

| Material | | Comparative Example 6 | Example 6 | Example 7 | Example 8 | Example 9 | Example 10 | Example 11 | Example 12 | Example 13 | |
|---|---|---|---|---|---|---|---|---|---|---|---|
| Tire frame | 100 | 100 | 100 | 75 | 100 | 100 | 100 | 100 | 100 | 100 | |
| | 0 | 0 | 0 | 25 | 0 | 0 | 0 | 0 | 0 | 0 | |
| Resin layer | 80 | 100 | 60 | 0 | 0 | 60 | 50 | 50 | 0 | 0 | |
| | 0 | 0 | 0 | 60 | 60 | 0 | 0 | 0 | 50 | 50 | |
| | 0 | 0 | 20 | 0 | 0 | 0 | 0 | 0 | 0 | 0 | |
| | 0 | 0 | 20 | 40 | 40 | 40 | 50 | 0 | 50 | 0 | |
| | 0 | 0 | 0 | 0 | 0 | 0 | 0 | 50 | 0 | 50 | |
| | 20 | 0 | 0 | 0 | 0 | 0 | 0 | 0 | 0 | 0 | |
| Resin layer thickness (µm) | | 2.2 | 2.2 | 2.2 | 2.2 | 1.8 | 2.2 | 2.2 | 2.2 | 2.2 | |
| Elastic modulus (MPa) | | 160 | 790 | 910 | 910 | 710 | 1,010 | 1,080 | 1,180 | 1,270 | |
| ΔTm(°C) | | 0 | -1 | 0 | 6 | -2 | -2 | -1 | 3 | 4 | |
| Bondability | | 3 | 3 | 4 | 3 | 4 | 4 | 4 | 3 | 3 | |
| Cornering power | | 1 | 4 | 4 | 4 | 4 | 4 | 4 | 4 | 4 | |

As shown in Table 1, the tires of the Examples, in which the resin layer includes a polyester thermoplastic elastomer and an amorphous resin that has an ester bond and has a Tg of 40°C or higher, and the content ratio of the amorphous resin is not higher than 50% by mass, exhibit favorable results in both of the bondability and the cornering power.

The tires in which the resin layer includes TPC1 and amorphous resin 1 (Examples 1 and 2) exhibit an increased elastic modulus while suppressing the difference in meltig point (ΔTm) to be -1°C and -2°C, respectively, as compared to a case where the resin layer includes only TPC1 (Comparative Example 1). As a result, the tires of Examples 1 and 2 exhibit improved cornering power and favorable bondability with respect to the tire frame.

The tires in which the resin layer is formed only of a polyester thermoplastic elastomer (Comparative Examples 1 and 2) have a lower elastic modulus of the resin layer than the tires of the Examples, and exhibit inferior cornering power as compared with the tires of the Examples.

The tire in which the resin layer includes TPC2 (Comparative Example 3), having a higher HS ratio and more rigid than TPC1 included in the resin layer of the tire of Comparative Example 1, has a greater difference in melting point (ΔTm) of 7°C, even though the elastic modulus is increased. As a result, while the cornering power is improved, bondability with respect to the tire frame is deteriorated.

The tires in which the content ratio of the amorphous resin is greater than 50% by mass (Comparative Examples 4 and 5) exhibit inferior bondability with respect to the tire frame, even though the cornering power is favorable.

The tire in which the amorphous resin had a Tg of lower than 40°C (Comparative Example 6) has a lower elastic modulus and exhibits inferior cornering power than the Examples.

### Description of Symbol

10: tire, 12: bead portion, 16: crown portion, 18: bead core, 20: rim, 21: bead sheet, 22: rim flange, 17: tire case, 24: sealing layer, 26: reinforcing cord, 26A: metal member, 27: coating resin, 28: reinforcing cord layer, 29: cushion rubber, 96: roughened irregularities, 30: tread

The disclosure of Japanese Patent Application No. 2017-118595 is hereby incorporated by reference in its entirety.

All the documents, patent applications and technical standards that are described in the present specification are hereby incorporated by reference to the same extent as if each individual document, patent application or technical standard is concretely and individually described to be incorporated by reference.

## Claims

1. A metal-resin composite member for tires, the metal-resin composite member comprising:
a metal cord; and
a resin layer, wherein:
the resin layer is formed from a resin mixture that contains a polyester thermoplastic elastomer and an ester bond-containing amorphous resin having a glass transition temperature (Tg) of 40°C or higher, and
a content ratio of the amorphous resin is not higher than 50% by mass of the resin mixture.

2. The metal-resin composite member for tires according to claim 1, wherein the amorphous resin is at least one selected from the group consisting of polyester thermoplastic resins and polycarbonate thermoplastic resins.

3. The metal-resin composite member for tires according to claim 1 or 2, wherein the resin layer has an elastic modulus of 400 MPa or higher.

4. A tire, comprising:
an annular tire frame; and
the metal-resin composite member for tires according to any one of claims 1 to 3, which is disposed on an outer circumferential portion of the tire frame,
wherein the tire frame is formed from a resin material containing a polyester thermoplastic resin.

5. The tire according to claim 4, wherein a difference in melting point between the resin material and the resin mixture is 6°C or less.

6. The tire according to claim 4 or 5, wherein the polyester thermoplastic resin comprises a polyester thermoplastic elastomer.

7. The tire according to any one of claims 4 to 6, wherein the metal-resin composite member for tires is disposed on the outer circumferential portion of the tire frame by winding.
